# EUROPEAN PATENT SPECIFICATION

(11) **EP 2 672 012 B1**
(45) Date of publication and mention of the grant of the patent: **30.12.2015**
(21) Application number: 12752575.6
(22) Date of filing: 02.03.2012
(51) Int. Cl.: E02D 5/28, E02D 5/64, E02D 27/42, F03D 11/04

(54) **A MONO-PILE TYPE FOUNDATION STRUCTURE FOR CONNECTING STEEL PIPE PILE AND STEEL SLEEVE PIPE**
PFAHLVERBINDUNGSSTRUKTUR ZUR VERBINDUNG VON STAHLROHRPFÄHLEN UND STAHLAUSSENROHREN
STRUCTURE DE LIAISON POUR RELIER UN PIEU TUBULAIRE EN ACIER ET UN TUBE EXTERNE EN ACIER

(30) Priority: 02.03.2011 JP 2011045761
(43) Date of publication of application: 11.12.2013
(73) Proprietor: Nippon Steel & Sumitomo Metal Corporation, Tokyo 100-8071 (JP)
(72) Inventor: TAENAKA, Shinji, Tokyo 100-8071 (JP); MATSUOKA, Kazumi, Tokyo 100-8071 (JP); ISHIKAWA, Tadashi, Tokyo 100-8071 (JP)
(74) Representative: Vossius & Partner Patentanwälte Rechtsanwälte mbB
(86) International application number: PCT/JP2012/055402
(87) International publication number: WO 2012/118186

(56) References cited:
- GB-A- 2 210 135
- JP-A- 8 284 159
- JP-A- 8 284 159
- JP-A- 63 097 711
- JP-A- 2001 303 558
- JP-A- 2006 037 397
- JP-U- H0 465 829

## Description

The present invention relates to a connection structure between a steel pipe pile and a steel sleeve pipe in a mono-pile type foundation structure of a wind power generation facility or the like on land or the sea.

As one type of renewable energy (sustainably utilizable energy), there is electric energy by a wind power generation facility. With respect to the wind power generation facility, in Japan, an overland type generation facility which is installed on land is a mainstream facility. However, mainly in Europe having a sea area with shoals, an ocean type generation facility which is installed on the sea is also being put to practical use. On the ocean, there are advantages in that, compared to on land, it is easy to stably secure wind with wind velocity which is suitable for wind power generation and that there are few problems regarding the building site, compared to on land. However, in order to install the generation facility on the ocean, it is necessary to construct a stable foundation in a seabed ground below a sea level and thus, costs are increased, compared to on land.

For such a situation, as a foundation in a case of the ocean, a jacket foundation, a caisson foundation, or the like can be considered. Among them, as a structure which is not easily affected by subsidence of a seabed ground or wave power and can be constructed at low cost compared to other foundation structures, there is a mono-pile type (single pile type) foundation structure (refer to, for example, JP 2006-46013 A).

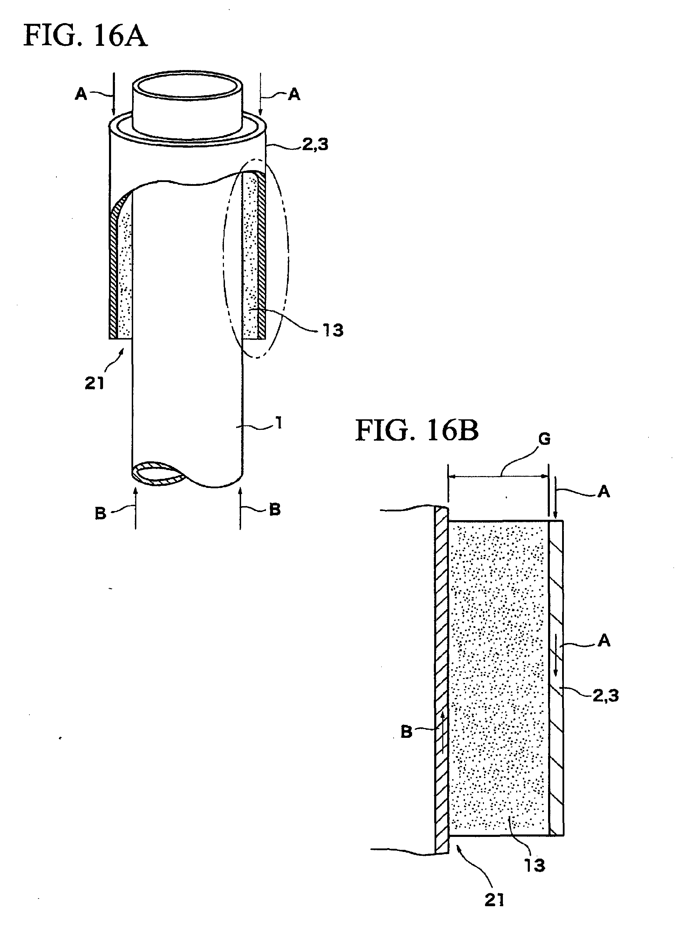

In the mono-pile type foundation structure described above, first, a steel pipe pile having a diameter in a range of 3 m to 5 m is installed in a seabed ground by a percussion method or the like. Next, as shown in FIGS. 16A and 16B, a steel outer sleeve structure member (hereinafter referred to as a steel outer sleeve 2) that is called a transition piece is installed on an upper portion of a steel pipe pile 1. Then, the steel pipe pile 1 and the steel outer sleeve 2 are integrally connected to each other by filling grout 13 therebetween. Such a connection method is called grout connection. In general, in the mono-pile type foundation structure, the steel outer sleeve 2 and a prop (a tower section) 16 that is a superstructure which is installed thereon are often combined with each other by bolt connections 25.

A grout connection portion is commonly used in a jacket ocean structure which has a large number of proven track record in oilfield development or the like. In JP 2005-133485 A and JP 2003-193486 A, an invention relating to a method for construction of the structure type is disclosed. In a grout connection portion according to such a related art, as a function thereof, it is necessary to transmit a load which is transmitted from a superstructure, from a sleeve pipe to a steel pipe pile through grout. In order to improve transmission efficiency of a shear force and assist in this load transmission, generally, a shear key (a shear key for transmitting a shear force) is installed in the grout connection portion. In API (American Petroleum Institute) RECOMMENDED PRACTICE 2A-WSD (Working Stress Design), 7.4.4.a Shear key connections (December 2000), as an example of such a shear key, there is description regarding an on-bead in which a weld rebar or a hot charge is directly installed on the surface of a steel pipe.

JP H08-284159 A discloses a connection structure of pile head in which concrete is placed between a steel pipe provided with protrusions at the external face and a head of a foundation pile made of a driving steel pipe pile, a soil cement composite steel pipe pile, a cast-in-place steel pipe concrete pile, etc provided with protrusions at the internal face.

The same grout connection is also used in a mono-pile type foundation structure that is a foundation structure of a wind turbine generation facility. However, generally, the shear key is not installed. This connection structure is a structure which depends on the surface friction of a steel material and has a low shear capacity, compared to a case of using the shear key. The reason that the installation of the shear key is not general in spite of this will be described below. A wind turbine itself is a vibrating body. In a foundation structure of the wind turbine, both a superstructure and a substructure are affected by specific shaking or a wind load. At this time, as shown by an arrow in FIGS. 16A and 16B, the steel outer sleeve 2 receives a repeated vibration load A in the vertical direction (only a downward load is shown). At the same time, a reaction B as shown by an arrow is generated in the steel pipe pile 1. As a result, in spite of the presence or absence of the shear key, fatigue is accumulated in the grout 13.

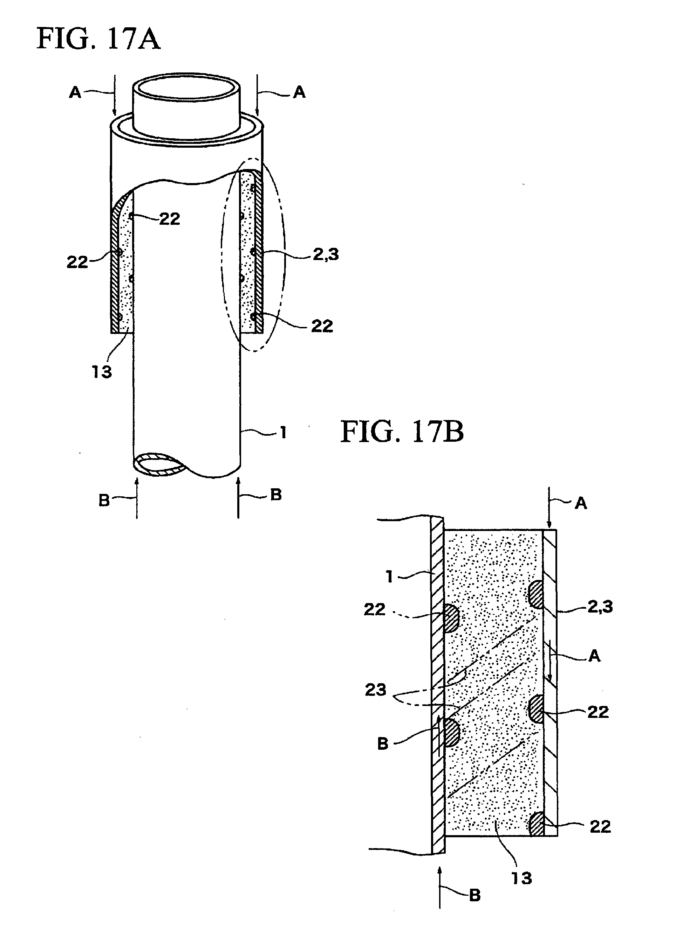

On the other hand, a case where shear keys 22 are provided on the steel pipe pile 1 and the steel outer sleeve 2 is shown in FIGS. 17A and 17B. In this structure, when the repeated vibration load A and the reaction B in the vertical direction, which are due to a wind turbine act, a compression area (a compression diagonal bracing) 23 is formed between the shear keys 22 facing each other in an oblique direction. As a result, compared to a case where there is no shear key, a higher adhesive force is exhibited. However, in a case where the shear key 22 is installed, in addition to the fatigue accumulation in the grout 13, a problem of fatigue is also concerned in a steel material which includes projections (a steel pipe and a weld portion of the shear key to the steel pipe).

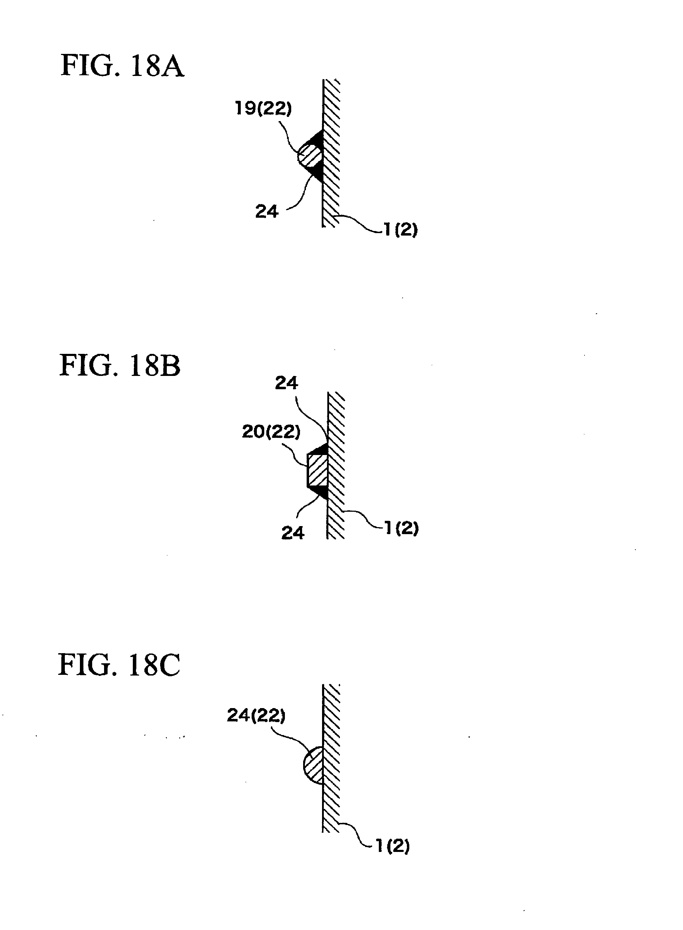

As a specific example of a method of constructing the shear key 22, as shown in FIGS. 18A and 18B, there is a case where a steel material such as a rebar 19 or a band-shaped steel plate 20 is welded to and installed at the steel pipe pile 1 or the steel outer sleeve 2. Further, as shown in FIG 18C, construction by an on-bead is also used. In either case, since it is necessary to perform heat input to a weld portion, tensile residual stress is generally introduced into a weld end, and thus fatigue resistance performance is significantly reduced. For this reason, a repeated load is loaded to the weld end by vibration of a structure, whereby a risk that a fatigue crack may occur is high.

For this reason, in the grout connection in the mono-pile type foundation structure which supports a structure in which vibration occurs, such as a wind turbine structure, only shear performance based on the surface roughness of a steel material is evaluated and structural design is then performed, and thus there is a problem in that a reasonable structure is not obtained.

In order to solve the above-described problem in the mono-pile type foundation structure, it is desirable to use a steel plate having a shear key whose structure does not reduce fatigue performance. Specifically, by focusing on weld heat input that is a cause of introduction of residual stress that is a problem of the shear key, it can be considered to perform installation of the shear key by a method other than welding.

In this respect, there is a method of using steel pipes in which concavity and convexity are formed in the surface for the steel pipe pile 1 and the steel outer sleeve 2 themselves, or the like. For example, the use of a single pipe with projections can be considered. A steel strip provided with continuous projections parallel to a rolling direction at the time of rolling is prepared, and this steel strip is shaped by a spiral pipe-making machine such that the projections are located on the inner surface or the outer surface of a steel pipe. Thereafter, a steel pipe is produced by arc welding. This method is also defined in the Japanese Industrial Standards (JIS A 5525). However, in a producing method or a producing facility defined in the Japanese Industrial Standards, an extra thick plate that is used in a mono-pile is not produced, and generally, a steel plate thickness of 30 mm or less is in a producing range for a spiral steel pipe. For this reason, this method cannot be applied to a foundation structure in the wind turbine facility. Further, in the producing method of the JIS standard, weld management of a spiral portion is difficult, and thus it is difficult to improve fatigue performance.

Further, even in a case where there is no restriction on the facility and an extra thick plate in which projections are provided on a plate surface is produced, in order to produce a steel pipe having a mono-pile structure, it is necessary to bend (perform bending work on) a steel plate by roll forming. At the time of the bending work, if the plate thickness of the steel plate is less than 35 mm, there is no concern that the projections of the steel plate may collapse. However, if it is an extra thick plate in which the plate thickness of the steel plate is greater than or equal to about 40 mm, a roll pressure load increases significantly, and thus a concern that the projections of the steel plate may collapse is high. From this, in a technique on an extension line of a single pipe with projections which is a related art, this problem cannot be realistically solved.

Further, there is the same problem in not only the above-described wind turbine generation facility but also a foundation structure of a tidal power generation facility. In this foundation structure, a steel sleeve pipe is connected to an upper portion of a steel pipe pile by grout connection and the tidal power generation facility is provided at the steel sleeve pipe. Since the tidal power generation facility has rotor blades disposed left-right-symmetrically, vibration acts on the steel sleeve pipe and a grout connection portion thereof and is transmitted to the steel pipe pile.

As described above, in either case of the wind turbine generation facility or the tidal power generation facility, vibration occurs in the steel sleeve pipe and the grout connection portion thereof due to the facility which is installed. In such a case, a grout connection portion which secures shear capacity with respect to a shear force acting on the grout connection portion and suppresses a decrease in fatigue performance of a weld portion is desired.

From such a perspective, the present invention has an object to provide a connection structure between a steel pipe pile and a steel sleeve pipe, in which a decrease in fatigue performance of the weld portion is suppressed and the shear capacity in the grout connection can be improved.

### [Means for Solving the Problem]

The object above can be achieved by the features defined in the claims.

According to the present invention, unlike the related art, projections are not directly welded to the steel pipe pile or the steel sleeve pipe. For this reason, weld places are greatly reduced, a problem of residual stress due to weld heat can be greatly reduced, and fatigue performance can be improved. Further, compared to the grout connection portion depending on only the surface friction of a steel material in the related art, the effect such as being capable of securing shear capacity of generally three to five times can be obtained.

According to the present invention, it is possible to make a shear force act in a longitudinal direction of the weld portion and resist with respect to a load that acts in the axial direction of the steel pipe pile or the steel sleeve pipe. For this reason, the weld portion can be configured so as to have tensile residual stress in a direction different from the direction of the load, and thus the fatigue performance of the weld portion can be improved.

According to the present invention, a weld line intersecting the axial direction of the steel pipe pile or the steel sleeve pipe does not exist. For this reason, brittleness due to tensile residual stress in the weld portion does not occur, and thus the fatigue performance of the entire connection structure can be improved.

According to the present invention, the longitudinal portion can be easily formed by providing the cutout or the slit. Further, since the longitudinal portions of the steel plates with projections adjacent to each other in the circumferential direction do not interfere, welding of the longitudinal portion of the steel plate with projections becomes easy.

According to the present invention, the projections of each steel plate with projections are formed at the time of hot rolling work. For this reason, unlike a form in which projections are fixed to a steel pipe pile or a steel outer sleeve by welding, as in the related art, there is also no problem of residual tensile stress due to welding, and thus the fatigue performance of the weld portion can be reliably improved.

According to the present invention, since each steel plate with projections has an elongated rectangular shape, it becomes simple to process the steel plate with projections according to the curvature of the steel pipe pile or the steel sleeve pipe, and installation of each steel plate with projections is easy.

According to the present invention, a load which is transmitted from a superstructure can be efficiently transmitted from the sleeve pipe to the steel pipe pile through the grout.

According to the present invention, is advantageous in that resistance to torsional torque is improved. In particular, in terms of the characteristics of a facility which is installed on a foundation structure, an advantageous effect is exhibited in a case where torsional torque is frequently transmitted from the facility to the foundation structure (for example, a water current generation facility).

According to the present invention, an anti-rust effect of an end portion of each steel plate with projections can be increased, and corrosion resistance of the connection portion between the steel pipe pile and the steel sleeve pipe can be increased.

According to the present invention, the steel plate with outward projections and the steel plate with inward projections can be produced from band-shaped steel plates having the same standard. Further, it is possible to obtain uniform shear capacity in which the distribution of strength and weakness is few, over the axial direction (the vertical direction) of a steel pipe.

The invention is described in detail in conjunction with the drawings, in which:
FIG 1 is a partially vertical cross-sectional front view showing a connection structure between a steel pipe pile and a steel sleeve pipe according to a first embodiment of the present invention.
FIG 2 is a cross-sectional view taken along line a - a of FIG. 1.
FIG 3A is an explanatory diagram of a process of installing a plate having projections on a steel pipe pile.
FIG 3B is an explanatory diagram of the process of installing a plate having projections on a steel pipe pile.
FIG 3C is an explanatory diagram of the process of installing a plate having projections on a steel pipe pile.
FIG 4 is a front view showing a state where a plate having projections has been installed on an outer surface of a steel pipe pile.
FIG 5 is a vertical cross-sectional front view showing a state where a plate having projections has been installed inside a steel sleeve pipe.
FIG 6 is a perspective view showing a band-shaped steel plate having projections.
FIG 7 is an enlarged front view showing the band-shaped steel plate having projections in FIG 6.
FIG 8 is a partially vertical cross-sectional front view showing a connection structure between a steel pipe pile and a steel sleeve pipe according to a second embodiment of the present invention.
FIG 9 is a cross-sectional view taken along line b - b of FIG 8.
FIG 10 is a partially vertical cross-sectional front view showing a modified form of a connection structure between a steel pipe pile and a steel sleeve pipe according to a second embodiment of the present invention.
FIG 11 is a cross-sectional view taken along line c - c of FIG. 10.
FIG 12 is a partially vertical cross-sectional front view showing a connection structure between a steel pipe pile and a steel sleeve pipe according to a third embodiment of the present invention.
FIG 13 is a front view showing a steel pipe pile according to a fourth embodiment of the present invention.
FIG 14 is a vertical cross-sectional front view showing a steel sleeve pipe according to the same embodiment.
FIG 15 is a front view showing a wind turbine generation facility in which a prop for a wind turbine is installed on a steel sleeve pipe connected to an upper portion of a steel pipe pile.
FIG 16A is a partially vertical cross-sectional perspective view showing a connection structure between a steel pipe pile and a steel sleeve pipe according to a related art.
FIG 16B is an enlarged vertical cross-sectional front view showing a site shown by a two-dot chain line in FIG. 16A.
FIG 17A is a partially vertical cross-sectional perspective view showing a connection structure between a steel pipe pile and a steel sleeve pipe according to another related art.
FIG. 17B is an explanatory diagram showing a change in cross section in a case where a load has acted on the connection structure of FIG 17A and a cross-sectional view showing the vicinity shown by a two-dot chain line in FIG. 17A.
FIG 18A is a cross-sectional view showing a form in which a rebar is fixed and which is a type of connection structure according to the above-described related art.
FIG 18B is a cross-sectional view showing a form in which a band steel plate is fixed and which is a type of connection structure according to the above-described related art.
FIG 18C is a cross-sectional view showing a form in which an on-bead overlaid by welding is provided and which is a type of connection structure according to the above-described related art.
FIG 19 is a conceptual diagram showing an outline of a general relationship between height (h) of a projection or distance (L) among projections and an adhesive force. A unit of each axis is a unit of strength, such as MPa. Since it is a conceptual diagram, the unit of h and the scale of each axis are not specified.

Next, each embodiment of the invention will be described in detail based on the drawings.

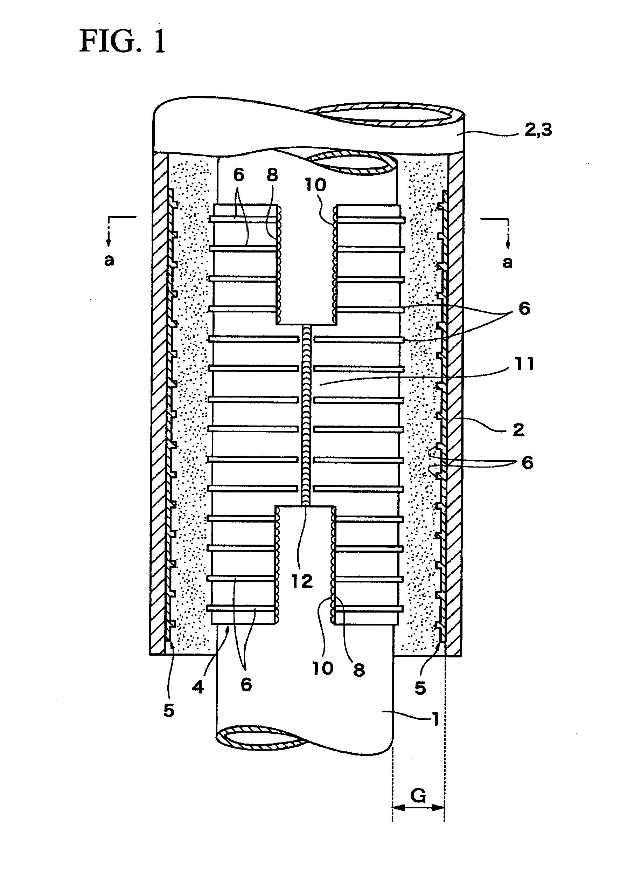

In FIGS. 1 to 7, a connection structure between a steel pipe pile and a steel sleeve pipe according to a first embodiment of the invention applied to a grout connection portion in a mono-pile type foundation structure on the ocean is shown.

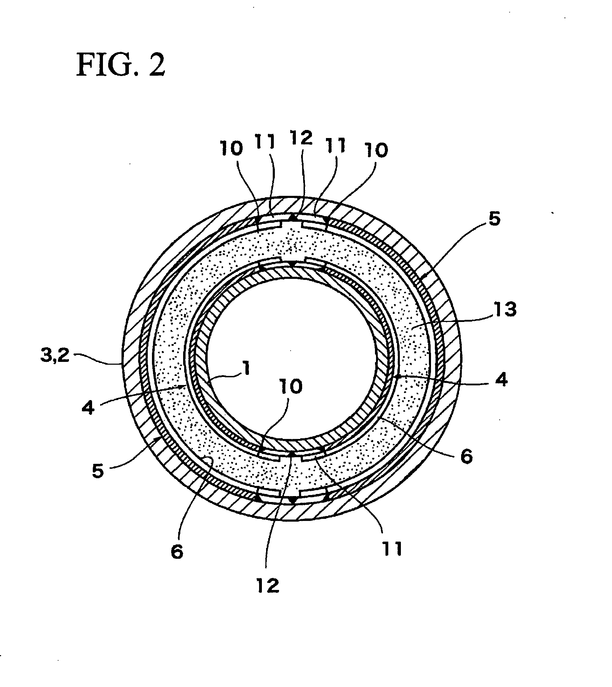

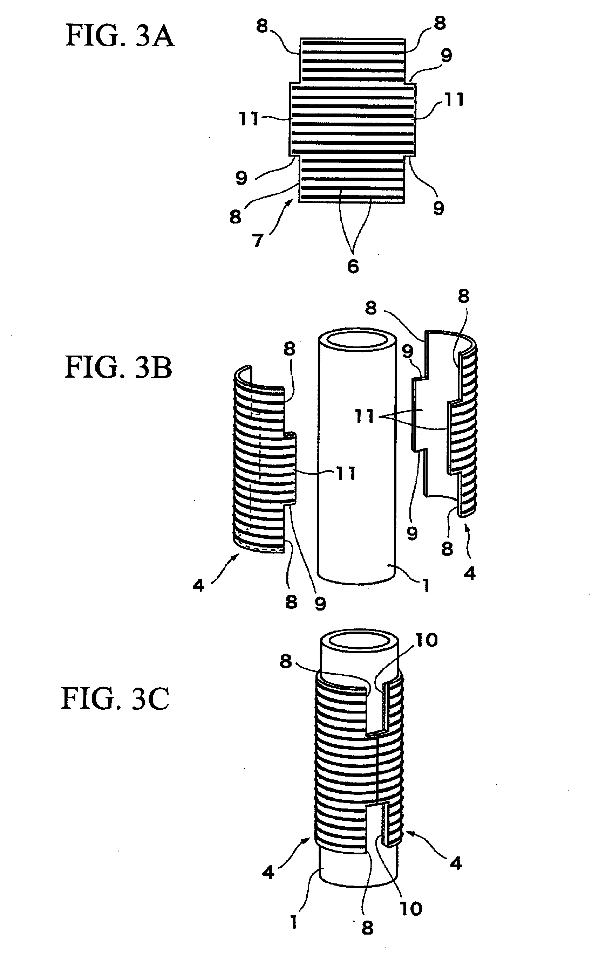

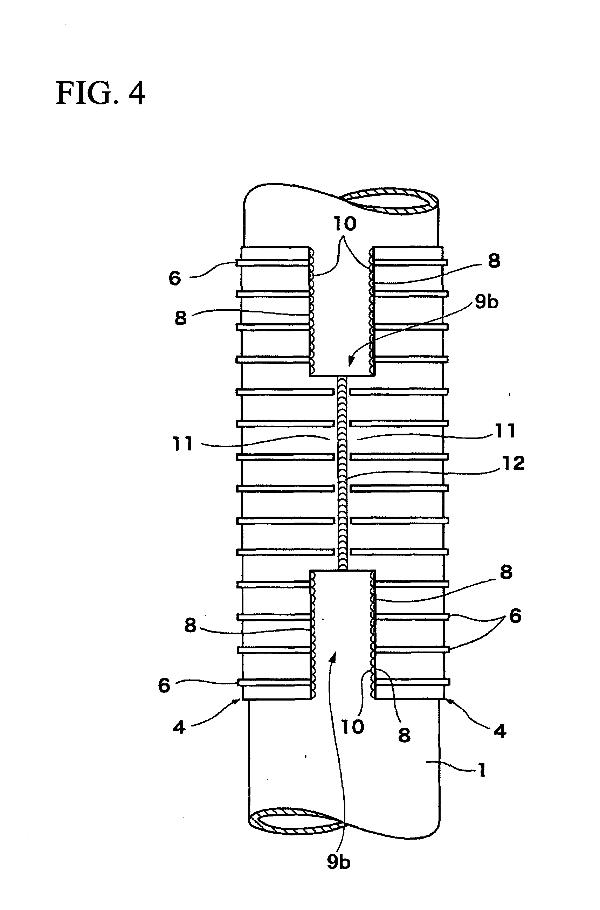

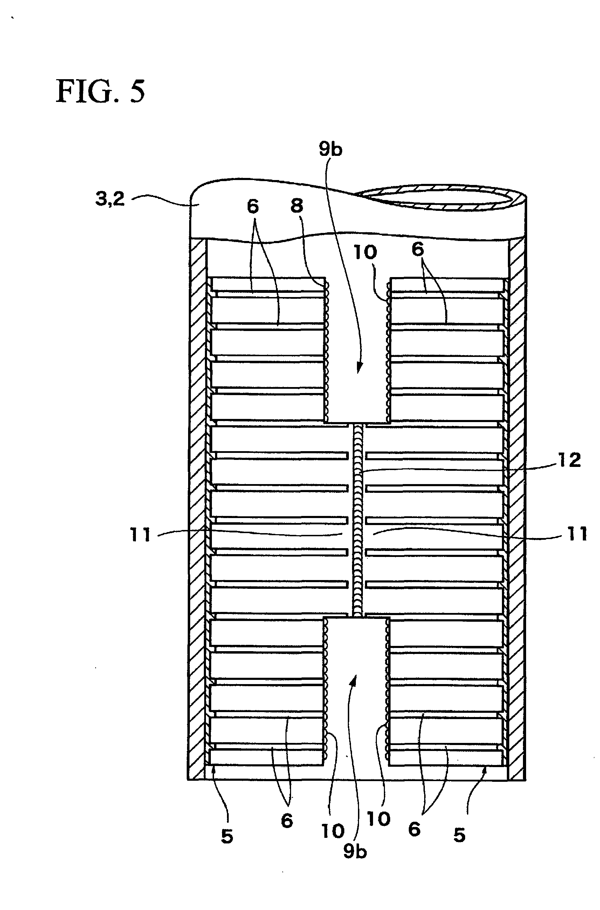

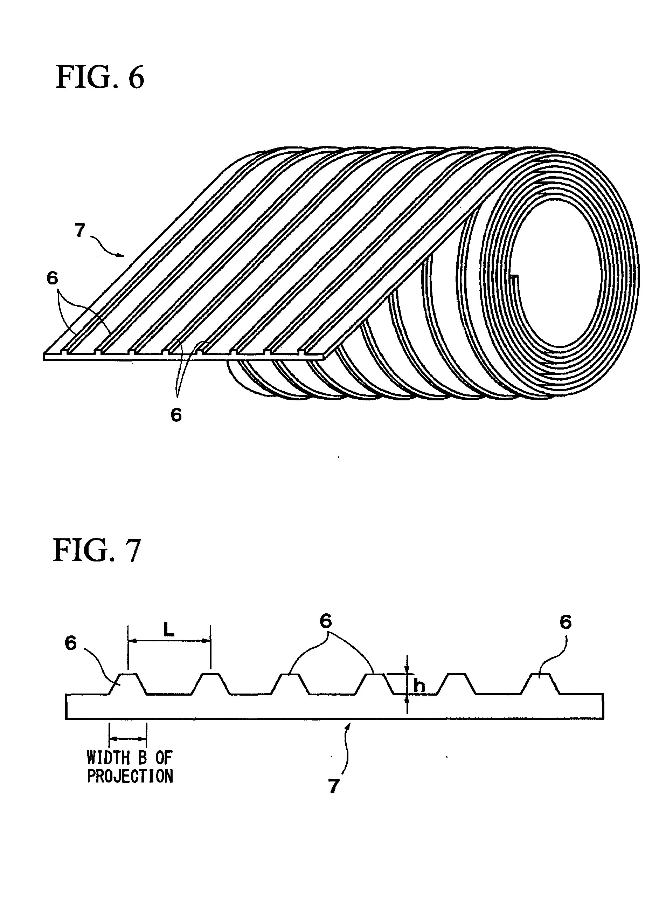

FIG. 1 is a partially vertical cross-sectional front view of a connection structure between a steel pipe pile and a steel sleeve pipe. FIG 2 is a cross-sectional view taken along line a - a of FIG 1. FIGS. 3A to 3C are explanatory diagrams of a process of installing a plate with projections formed thereon on the steel pipe pile. FIG 4 is a front view showing a state where the plate with projections formed thereon has been installed on the outer surface of the steel pipe pile. FIG. 5 is a vertical cross-sectional front view showing a state where a plate with projections formed thereon has been installed inside the steel sleeve pipe. FIG 6 is a perspective view showing a band-shaped steel plate with projections formed thereon. FIG 7 is an enlarged front view showing the band-shaped steel plate having projections in FIG. 6.

The connection structure according to this embodiment is a connection structure between a steel pipe pile 1 and a steel sleeve pipe (a steel outer sleeve 2) disposed around the steel pipe pile 1 with a gap therebetween. This connection structure includes a steel plate with outward projections 4 having a plurality of outward projections (projections 6) and fixed to the outer peripheral surface of the steel pipe pile 1 by a weld portion (a first weld portion); a steel plate with inward projections 5 having a plurality of inward projections (projections 6) and fixed to the inner peripheral surface of the steel outer sleeve 2 by a weld portion (a second weld portion); and a grout 13 filled between the steel pipe pile 1 and the steel outer sleeve 2 so as to bury at least the steel plate with outward projections 4 and the steel plate with inward projections 5. The plurality of outward projections (the projections 6) is disposed at intervals in the vertical direction with respect to one another and extends over a circumferential direction of the steel pipe pile 1. The plurality of inward projections (the projections 6) is disposed at intervals in the vertical direction with respect to one another and extends over a circumferential direction of the steel outer sleeve 2. The grout 13 is filled in a gap between the inner peripheral surface of the steel pipe pile 1 and the outer peripheral surface of the steel pipe pile 1. In the gap, not only a place where the steel plate with outward projections 4 and the steel plate with inward projections 5 are installed, but also a place where both the steel plates 4 and 5 are not installed may be filled.

In the above and following description, the terms, outward and inward, respectively indicate a direction away from a pipe axis of a steel pipe (the steel pipe pile 1 or the steel outer sleeve 2) and a direction coming close to the pipe axis.

In the above and following description, the expression "the projection extends over a circumferential direction" does not necessarily mean a direction that completely matches a circumferential direction, and means that an extending direction of the projection has a component of a circumferential direction. This relationship may be defined as "when viewed at the line of sight perpendicular to a specific place of the steel plate with projections, the projection of the place extends in a direction crossing the pipe axis of a steel pipe". At this time, it is desirable that a circumferential direction component be larger than an axial direction component of the extending direction of the projection. Specifically, the expression "a plurality of outward projections extends substantially along the circumferential direction of the steel pipe pile" means that the extending direction of the plurality of outward projections has a component in the circumferential direction of the steel pipe pile. It is desirable that the extending direction be closer to the circumferential direction than the axial direction of the steel pipe pile. Further, the expression "a plurality of inward projections extends substantially along the circumferential direction of the steel sleeve pipe" means that the extending directions of the plurality of inward projections have a circumferential component of the steel sleeve pipe. It is desirable that the extending direction be closer to the circumferential direction than the axial direction of the steel sleeve pipe.

In the mono-pile type foundation structure according to this embodiment, the steel pipe pile 1 and the steel outer sleeve 2 (also referred to as a steel sleeve, a transition piece, or a steel sleeve pipe 3) are connected to each other by the grout connection portion using the grout 13.

A plate thickness dimension of a thick steel plate constituting the steel pipe pile 1 and the steel outer sleeve 2 is generally in a range of 35 mm to 110 mm, and in particular, the plate thickness dimension is often in a range of 40 mm to 110 mm. In a large-scaled ocean facility, a steel plate having a plate thickness of around 100 mm is often used.

The steel pipe pile 1 and the steel outer sleeve 2 are formed by, for example, the following process. First, a certain curvature is given by bending (performing bending work on) a thick steel plate having a required plate thickness by roll forming. Thereafter, several steel plates are arranged along the circumferential direction of a steel pipe and connected to each other by welding, thereby forming an annular steel pipe unit. The steel pipe unit is formed in plural, and the plurality of steel pipe units is welded to each other in a longitudinal direction, thereby forming a steel pipe having a length that is required in a design. Specifically, with respect to the length of the steel outer sleeve 2, for example, a length of about 1 to 2 times the diameter of the steel pipe is required, and with respect to the length of the steel pipe pile 1, a length of greater than or equal to 10 m (in general, in a range of 50 m to 60 m) is required.

The steel pipe pile or the steel outer sleeve according to the related art is made by performing bending work on a thick steel plate with projections. In pipe-making work of a thick steel plate, since working pressure corresponding to the plate thickness of the steel plate is applied, during the bending work, a concern that the projection of the thick steel plate may collapse is great.

In contrast, in each embodiment of the present invention, a steel plate with projections is formed separately from a main body of a steel pipe structure such as the steel pipe pile 1 or the steel outer sleeve 2. Then, the steel plate with projections is fixed to the outer peripheral surface of the steel pipe pile 1 or the inner peripheral surface of the steel outer sleeve 2. That is, the steel plate with outward projections 4 is mounted on the outer peripheral surface of the steel pipe pile 1. Further, the steel plate with inward projections 5 is mounted on the inner peripheral surface of the steel outer sleeve 2. The steel plate with outward projections 4 and the steel plate with inward projections 5 are provided to face each other such that protrusion directions of each other's projections face each other.

In addition, in a mono-pile type foundation structure 21, the overall length in the axial direction of the steel pipe pile 1 is, for example, about 60 m. The central axis of the steel pipe pile 1 is often installed in a state of being inclined with respect to a vertical line because of a position shift due to a construction error. For this reason, each member is designed so as to compensate for a construction error during the installation of the steel pipe pile 1 by installing vertically (perpendicular to the horizontal plane) the steel outer sleeve 2 outside the steel pipe pile 1. For this reason, a relatively spacious gap G is formed between the outer peripheral surface of the steel pipe pile 1 and the inner peripheral surface of the steel outer sleeve 2.

As shown in FIGS. 3A to 7, the steel plate with outward projections 4 and the steel plate with inward projections 5 which are used in each embodiment of the present invention are manufactured by appropriately performing cutting and bending work on a band-shaped steel plate 7. On the band-shaped steel plate 7, the continuous projections 6 (here referred to as rolled projections) parallel to a rolling direction are formed by rolling work. The projections 6 become the projections 6 (the outward projections and the inward projections) which will be described later.

As shown in FIG 7, as the band-shaped steel plate with projections 7, a band-shaped steel plate with projections is used in which the height h of the projection 6 is greater than or equal to 2.5 mm, the width B of the projection 6 is greater than or equal to 4 mm and less than or equal to 20 mm, a distance L between the projections 6 is greater than or equal to 30 mm and less than or equal to 40 mm, a thickness dimension (does not include the height of the projection 6) in a through-thickness direction is less than 35 mm, such as, for example, less than or equal to 30 mm.

In a case of installing the steel plate with outward projections 4 or the steel plate with inward projections 5 as described above, it is good to perform the installation, as in the following (1) to (5). (1) The projections 6 of the plate surface of each of the steel plates with projections 4 and 5 and a concavity between the projections 6 are formed on only one side, and if the plate thickness is sufficient for installation on each steel pipe by welding, it is desirable that the plate thickness be smaller. (2) It is more desirable that the steel plate with outward projections 4 and the steel plate with inward projections 5 be produced by hot rolling. This is because a possibility that fatigue performance may be decreased due to the influence of weld heat in a process of installing the projections 6 can be eliminated. (3) After the band-shaped steel plate with projections 7 is cut to a required length, it is necessary to bend each of the steel plates with projections 4 and 5 according to the curvature of the steel pipe. Since the plate thickness of each of the steel plates with projections 4 and 5 is less than 35 mm and is smaller than the plate thicknesses of the steel pipe pile 1 and the steel outer sleeve 2, it is not necessary to apply a load which is such large that the projections 6 collapse at the time of pressure load of roll rolling (press bending is also possible). (4) Each steel plate with projections is mainly installed on the steel pipe by a fillet weld. With respect to a weld place at this time, it is desirable to avoid a weld line perpendicular to the axial direction of the steel pipe pile 1 on which tension acts at the time of generation of bending of the steel pipe, and perform welding (for example, a fillet weld) 10 in a direction matching the axial direction of the steel pipe pile 1. Welding in which a weld line is disposed along a direction of a shear force which is generated at the time of generation of bending of the steel pipe in this manner is referred to as shear welding in this specification. In the shear welding, it is known that problem is less with respect to fatigue. (5) From the viewpoint of the above, when the band-shaped steel plate with projections 7 that is a material for each of the steel plates with projections 4 and 5 is cut to a predetermined size, it is desirable to increase the length of a weld portion in the axial direction of the steel pipe pile. For this reason, a shape having longitudinal portions 8 (a first longitudinal portion and a second longitudinal portion) that are sides (end portions) matching the pipe axial direction is more desirable than a simple quadrangular shape. These portions can also be referred to as longitudinal side portions. As an example of a desirable shape, a shape having a cutout portion 9 in which the longitudinal portion 8 is made by cutting a corner, or a slit (illustration is omitted) having the longitudinal portion 8 matching the pipe axial direction can be given. Further, by increasing a weld place, it is possible to minimize a weld leg length and furthermore, minimize each of the steel plates with projections 4 and 5. As a result, it becomes easier to perform curvature working and the weight of a steel material is also reduced, thereby contributing to a reduction in cost.

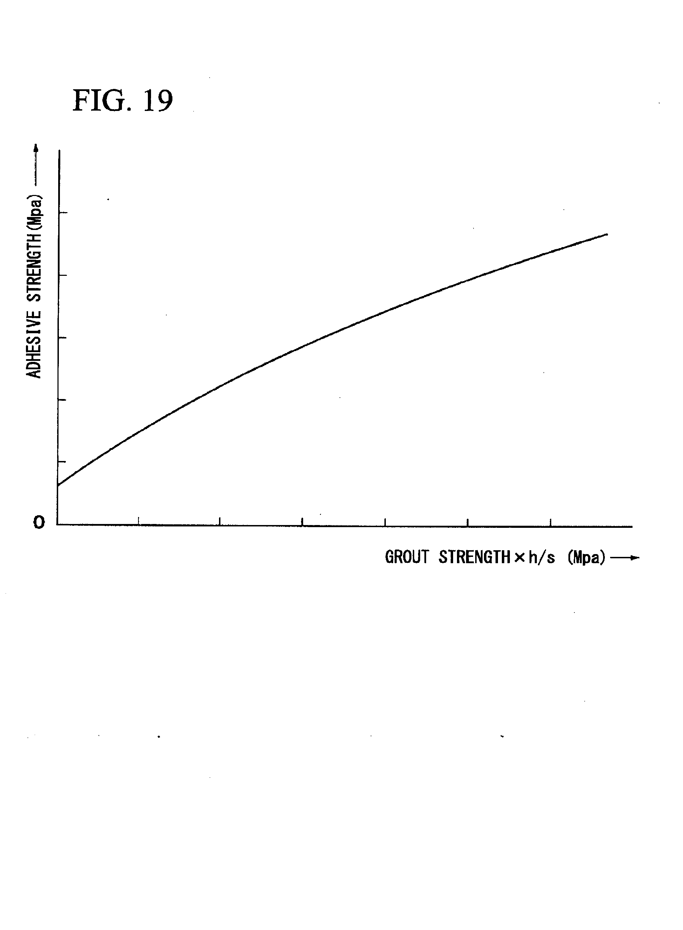

Next, the projection 6 (the outward projection) of the steel plate with outward projections 4 and the projection 6 (the inward projection) of the steel plate with inward projections 5 will be more specifically described. As the height h of the projection 6 which is provided at the steel plate with outward projections 4 and the steel plate with inward projections 5, the projection 6 is formed with a height ranging from 2.5 mm to 25 mm, for example. In addition, in a state (FIG 1) where the grout 13 is filled between the steel pipe pile 1 and the steel sleeve pipe, as shown in FIG. 19, there is a non-linear correlation in which if the height h of the projection 6 or the number thereof increases, an adhesive force is increased. For example, in a mono-pile foundation structure in wind turbine generation according to the related art in which there is no projection, the value of the horizontal axis of FIG 19 becomes 0, and thus an adhesive force becomes small. The vertical axis of FIG. 19 represents adhesive strength (a unit is, for example, MPa) of a grout connection structure and the horizontal axis represents [grout strength] x h/s (a unit is, for example, MPa). Here, h represents the height of the projection and s represents the number of projections. Since FIG. 19 is a conceptual diagram showing an outline of a general correspondence relationship, the scale of each axis and the unit of each variable are not specified.

With respect to the relationship between the distance L (a pitch) in the vertical direction among the projections 6 (the outward projections) of the steel plate with outward projections 4 and the distance L in the vertical direction among the projections 6 (the inward projections) of the steel plate with inward projections 5, the distances need not necessarily be the same. However, it is preferable that the distances be the same. In this case, the steel plate with outward projections 4 and the steel plate with inward projections 5 can be produced from the band-shaped steel plates 7 having the same standard.

The band-shaped steel plate with projections 7 as described above is processed by the following processes. First, a flat plate-shaped steel plate with projections is formed by cutting the band-shaped steel plate with projections 7 to a predetermined shape. Then, the steel plate with projections is disposed such that the projections 6 are located outside or inside and extend laterally, and then are bent (subjected to bending work) by roll forming so as to conform to the curvature of the outer peripheral surface of the steel pipe pile 1 or the inner peripheral surface of the steel outer sleeve 2 (refer to FIGS. 3A to 3C). With these processes, the steel plate with outward projections 4 (refer to FIG 4) or the steel plate with inward projections 5 (refer to FIG. 5) is produced. The steel plate with outward projections 4 is fixed to the outer peripheral surface of the steel pipe pile 1 by the fillet weld 10 in the axial direction (the first weld portion or a fillet weld having an axial weld line). Further, the steel plate with inward projections 5 is fixed to the inner peripheral surface of the steel outer sleeve 2 by the fillet weld 10 in the pipe axial direction (the second weld portion or a fillet weld having an axial weld line).

As described above, the steel plate with outward projections 4 and the steel plate with inward projections 5 are respectively fixed by the fillet weld in a direction matching the axial direction of the steel pipe pile 1 and the axial direction of the steel outer sleeve 2. Each of the steel plates with projections 4 and 5 is fixed by using only the fillet weld in a direction matching the axial direction. In this way, a weld line has the same direction as a vibration load in the vertical direction, thereby being able to have stronger resistance to the shear at the weld portion. In contrast, in a case where each of the steel plates with projections 4 and 5 is fixed by fillet weld 24 in the circumferential direction of a steel pipe (refer to FIGS. 18A to 18C), the direction of residual stress at a weld connection portion which is generated by the fillet weld and the direction of a vibration load coincide with each other, and thus the fatigue performance of the weld portion is lowered. For this reason, in this embodiment,
welding in the horizontal direction (the circumferential direction) is not performed on upper and lower portions of the steel plate with outward projections 4 and the steel plate with inward projections 5, and the cutout portion 9 or the slit.
that the steel plate with outward projections 4 and the steel plate with inward projections 5 are fixed by only the fillet weld having a weld line parallel to the axial direction of the steel pipe. That is, the fillet weld 10 of the outer peripheral surface of the steel pipe pile 1 and the fillet weld 10 of the inner peripheral surface of the steel outer sleeve 2 are the fillet weld having only an axial weld line.

In order to enable the weld connection as described above, as shown in FIGS. 3A to 5, the cutout portions 9 or the slits having the longitudinal portions 8 (longitudinal sides or steel pipe end portions) in a direction matching the pipe axial direction on the steel pipe pile or steel sleeve pipe side are provided at both side portions of each of the steel plate with outward projections 4 and the steel plate with inward projections 5. In the longitudinal portions 8, the steel plate with outward projections 4 is fixed to the outer peripheral surface of the steel pipe pile 1 by the fillet weld 10 and the steel plate with inward projections 5 is fixed to the inner peripheral surface of the steel outer sleeve 2 by the fillet weld 10. That is, the fillet weld 10 (the first weld portion) of the outer peripheral surface of the steel pipe pile 1 is disposed between the outer peripheral surface of the steel pipe pile 1 and the longitudinal portion (the first longitudinal portion) of the steel plate with outward projections 4. The fillet weld 10 (the second weld portion) of the inner peripheral surface of the steel outer sleeve 2 is disposed between the inner peripheral surface of the steel outer sleeve 2 and the longitudinal portion (the second longitudinal portion) of the steel plate with inward projections 5.

Each steel plate with projections is fixed by welding of only these longitudinal portions.

In a form shown in FIGS. 3A to 3C and 4, a plurality of (for example, two) steel plates with outward projections 4 arranged in the circumferential direction is provided on the outer peripheral surface of the steel pipe pile. Each steel plate with outward projections 4 has the cutout portions 9 respectively provided at upper portions and lower portions of both side portions. An intermediate portion which is located between the upper and lower cutout portions 9 has an intermediate protrusion portion 11 protruding in the circumferential direction. The intermediate protrusion portions 11 of the two steel plates with outward projections 4 adjacent to each other in the circumferential direction are connected to each other by a butt weld 12. By this connection, the plurality of steel plates with outward projections 4 is integrated in a tubular shape. In this state, slits 9b are formed in an upper portion and a lower portion by the cutout portions 9 of adjacent steel plates with outward projections 4.

Similarly, as shown in FIG 5, a plurality of (for example, two) steel plates with inward projections 5 arranged in the circumferential direction is provided on the inner peripheral surface of the steel outer sleeve 2. Each steel plate with inward projections 5 has the cutout portions 9 respectively provided at upper portions and lower portions of both side portions. An intermediate portion which is located between the upper and lower cutout portions 9 has an intermediate protrusion portion 11 protruding in the circumferential direction. The intermediate protrusion portions 11 of the two steel plates with inward projections 5 adjacent to each other in the circumferential direction are connected to each other by a butt weld 12. By this connection, the plurality of steel plates with inward projections 5 is integrated in a tubular shape. In this state, slits with the cutout portions 9 are formed up and down. In this state, slits 9b are formed in an upper portion and a lower portion by the cutout portions 9 of adjacent steel plates with inward projections 5.

As shown in FIGS. 4 and 5, the cutout portions 9 may be provided in both side portions of the steel plate with outward projections 4 or both side portions of the steel plate with inward projections 5. Further, a slit (not shown) in the axial direction of the pipe may be provided in one or both of upper and lower portions in the intermediate portion in the circumferential direction of the steel plate with outward projections 4 or the steel plate with inward projections 5. The longitudinal portion 8 for connecting by a fillet weld can be formed by the cutout portion 9 or the slit.

In addition, as shown in FIGS. 4 and 5, at a front end portion in the circumferential direction of the intermediate protrusion portion 11 in each of the steel plate with outward projections 4 and the steel plate with inward projections 5, the projections 6 may be cut off such that the projections 6 start from a position away from a front end in the circumferential direction. In this case, a butt weld can be performed in a certain plate thickness. Further, it is desirable that the plate thickness dimensions of the leading ends in the circumferential direction of the intermediate protrusion portions 11 of adjacent steel plates with outward projections 4 or adjacent steel plates with inward projections 5 be the same.

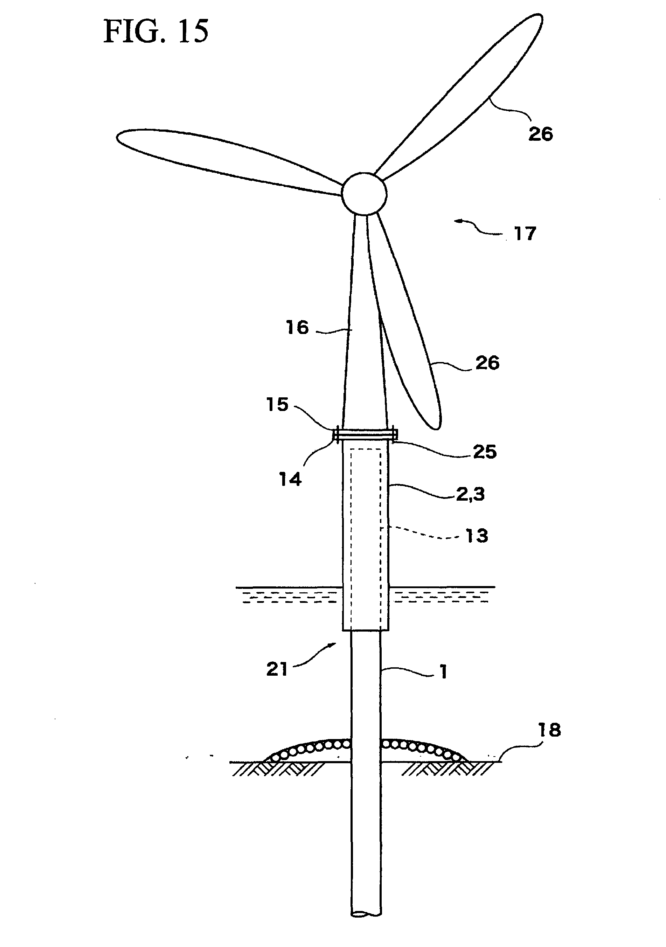

Next, a process of connecting the steel pipe pile 1 and the steel outer sleeve 2 as described above to each other by using the grout 13 will be described with reference to a wind turbine generation facility shown in FIG 15.

After the steel pipe pile 1 is constructed so as to be erected in a bottom ground or a seabed ground 18, a required number of steel plates with outward projections 4 are transported to and disposed at a predetermined position by a crane barge. Then, the steel plate with outward projections 4 is temporarily fixed to the outer peripheral surface of an upper end portion of the steel pipe pile 1 by using a temporary fixation jig or the like. Thereafter, the steel plate with outward projections 4 is fixed by welding. Then, the required number of steel plates with inward projections 5 are fixed to the inner peripheral surface of the steel outer sleeve 2 assembled in a factory or a construction site. Thereafter, the steel outer sleeve 2 having the steel plates with inward projections 5 is vertically disposed at the upper end portion of the steel pipe pile 1 provided with the steel plate with outward projections 4, in a loose fit state. Then, the steel outer sleeve 2 is appropriately held on the steel pipe pile 1 by a temporary holding jig (illustration is omitted) or the like. Then, the cement-based grout 13 such as mortar is filled in a space between the steel pipe pile 1 and the steel outer sleeve 2 and cured, thereby fixing the steel outer sleeve 2 to the upper end portion of the steel pipe pile 1. Thereafter, similarly to the related art, an upper flange 14 of the steel outer sleeve 2 and a lower flange 15 of a lower portion of a tower (a prop) 16 are connected to each other by a bolt connections 25. Then, a wind turbine generator provided with blades 26 is installed at an upper portion of the prop 16.

In addition, in grout connection using the grout 13, installing the steel plates with projections 4 and 5 over the overall length in the axial direction of the grout connection is considered to be desirable in terms of an increase in design shear capacity. On the other hand, at an end portion (an upper end portion) of the grout connection, there is a concern that a construction defect may occur in the grout filling. Further, at the time of acting a bending load due to wind, there is a concern that cracks may occur in the upper end portion and lower end portion of the grout. For this reason, it is preferable not to expect shear capacity in the upper end portion and the lower end portion. From this point of view, it is desirable that the installation ranges of the steel plates with projections 4 and 5 do not correspond to the overall length of the grout connection and be set as a state of omitting the end portion and being away from the grout end portion, so as to be installed closer to the central portion than the end portion.

### (Second Embodiment)

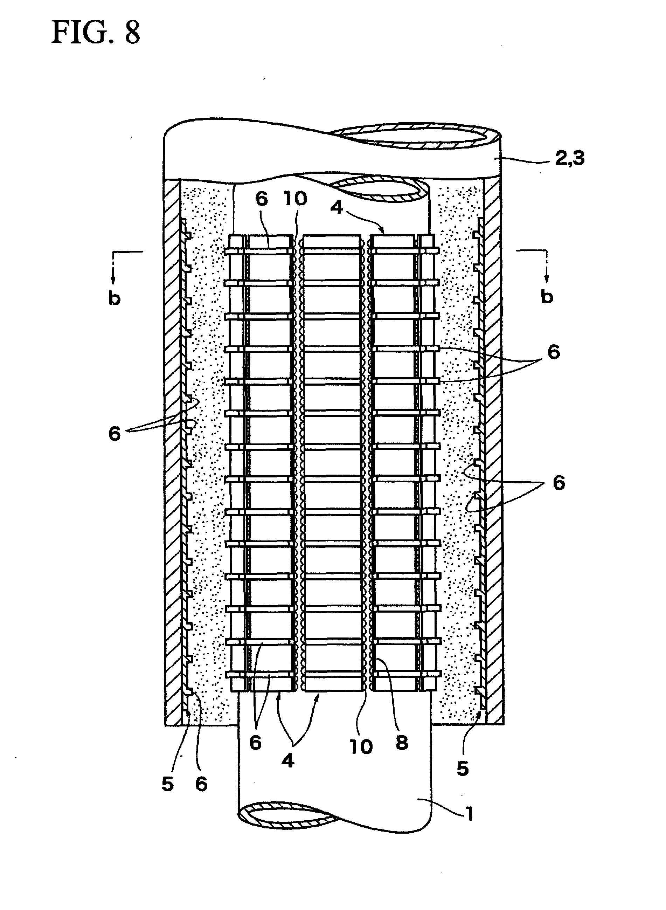

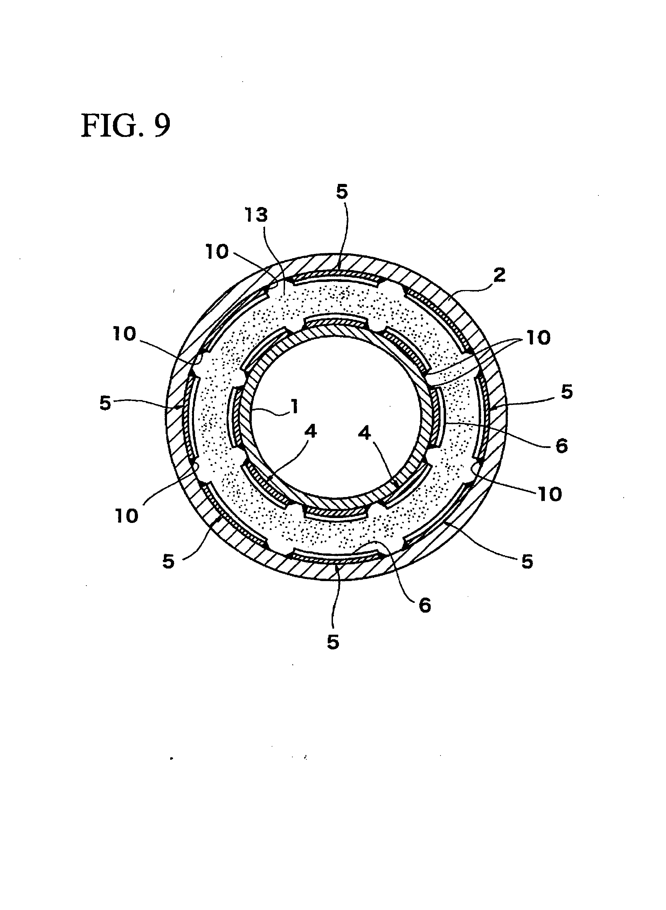

In FIGS. 8 and 9, a connection structure between the steel pipe pile 1 and the steel outer sleeve 2 according to a second embodiment of the present invention is shown. FIG. 8 is a partially vertical cross-sectional front view and FIG 9 is a cross-sectional view taken along line b - b of FIG. 8.

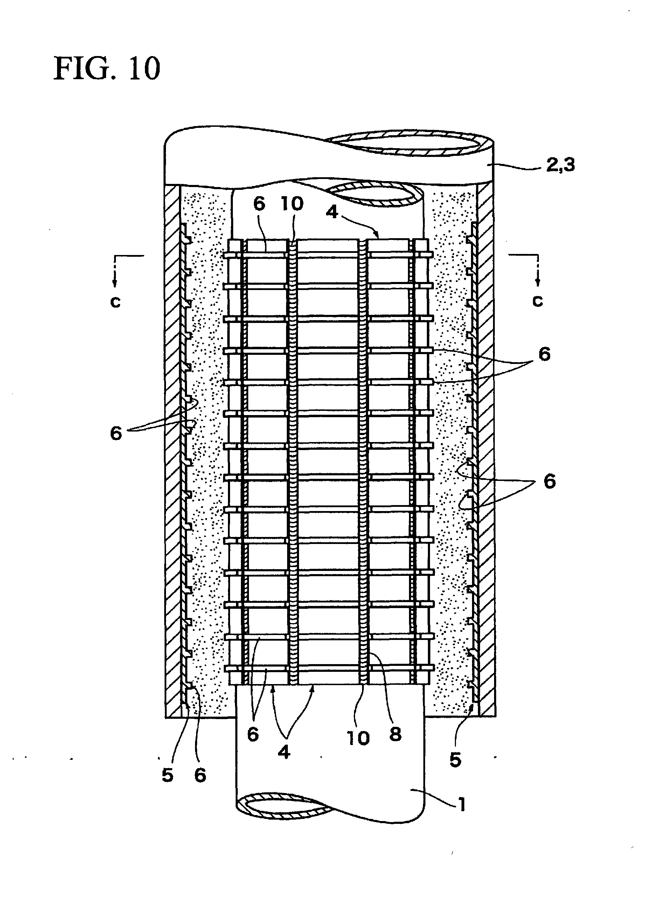

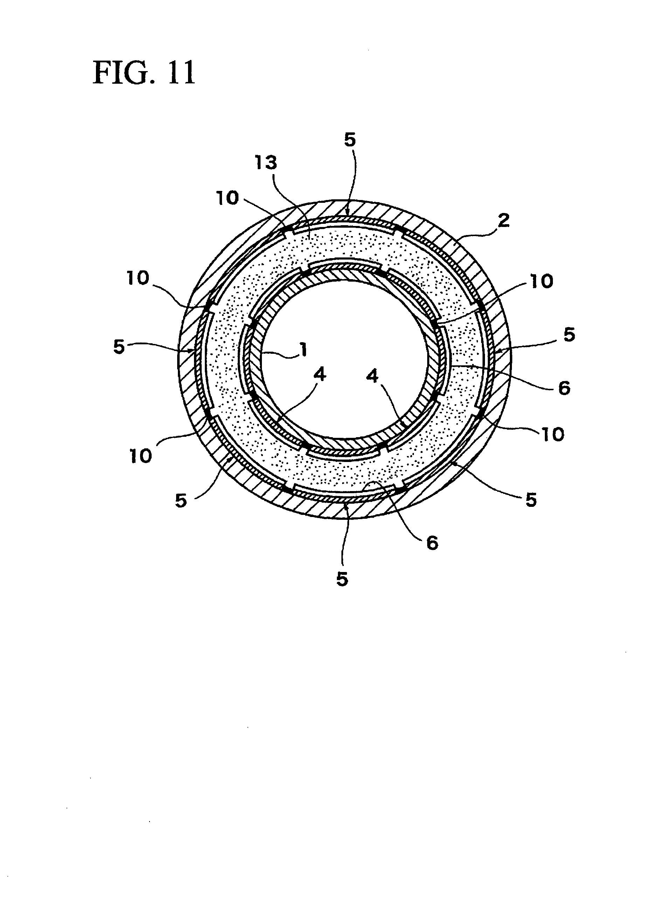

In the connection structure according to the second embodiment, each of the steel plate with outward projections 4 and the steel plate with inward projections 5 has a rectangular shape which is longer in the vertical direction than in the horizontal direction (hereinafter referred to as an elongated rectangular shape). In this case, a plurality of steel plates with projections 4 and 5 is installed side by side in the circumferential direction on the outer peripheral surface of the steel pipe pile 1 and the inner peripheral surface of the steel outer sleeve 2. In this case, as shown in FIG 8, the steel plates with projections 4 (5) adjacent to each other in the circumferential direction may be installed at intervals. Further, as a modified form of this embodiment, as shown in FIGS. 10 and 11, the steel plates with projections 4 (5) adjacent to each other in the circumferential direction may be butt-welded to each other and at the same time, fixed to the outer peripheral surface of the steel pipe pile 1 and the inner peripheral surface of the steel outer sleeve 2 by welding. Further, although illustration is omitted, in a case where each of the steel plates with projections 4 and 5 has the intermediate protrusion portion 11 at the intermediate portion in the vertical direction thereof, a member with projections having a tubular shape as a whole may be formed by integrating the intermediate protrusion portions 11 adjacent to each other in the circumferential direction by a butt weld. Since other configurations are the same as those in the first embodiment described above, the same portions are denoted by the same reference numerals.

### (Third Embodiment)

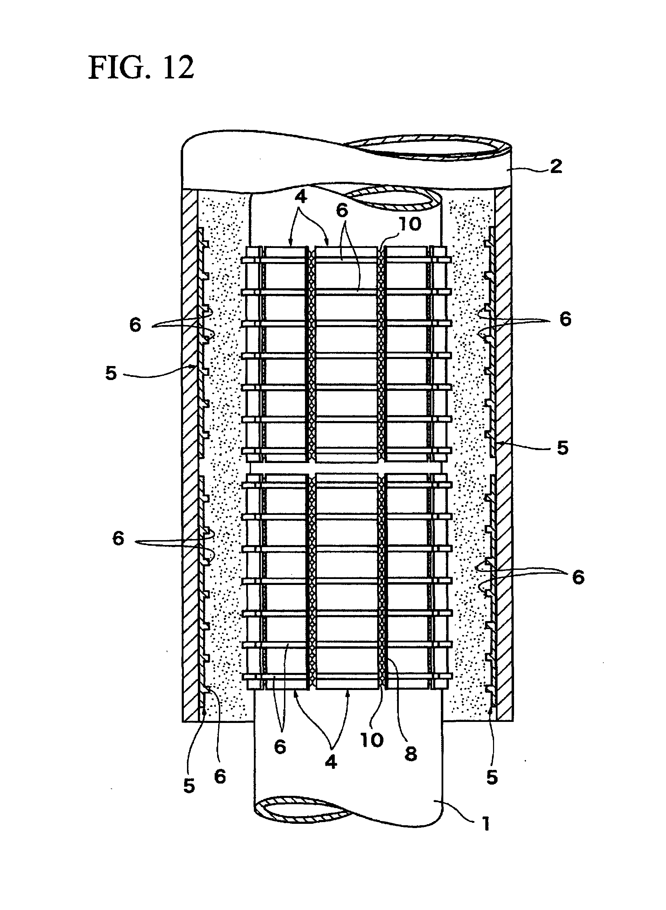

FIG 12 is a partially vertical cross-sectional front view showing a connection structure between the steel pipe pile 1 and the steel outer sleeve 2 according to a third embodiment of the present invention.

In this embodiment, a plurality of elongated rectangular steel plates with outward projections 4 is disposed at intervals (equal angular intervals) in the circumferential direction at an upper portion of the steel pipe pile 1. In addition, a plurality of elongated rectangular steel plates with outward projections 4 is disposed at intervals (equal angular intervals) in the circumferential direction at a lower portion of the steel pipe pile 1. The steel plate with outward projections 4 of the upper portion and the steel plate with outward projections 4 of the lower portion are disposed at an interval with respect to one another along the axial direction of the steel pipe pile 1. Similarly, the elongated rectangular steel plates with inward projections 5 are installed at intervals (equal angular intervals) in the circumferential direction and at an interval in the vertical direction at an upper portion and a lower portion of the inner peripheral surface of the steel outer sleeve 2. If each of the steel plate with outward projections 4 and the steel plate with inward projections 5 is formed of an elongated rectangular steel plate with projections, it becomes simple to perform bending work on the steel plate with projections according to the curvature of the outer peripheral surface of the steel pipe pile or the inner peripheral surface of the steel sleeve pipe. Further, compared to a case of using a semi-tubular steel plate with projections, transport and installation are easy. Since other configurations are the same as those in the first embodiment described above, the same portions are denoted by the same reference numerals. It is preferable that the steel plate with outward projections 4 and the steel plate with inward projections 5 have a rectangular shape which is longer in the vertical direction than in the horizontal direction.

The extending direction of the projection 6 of the steel plate with outward projections 4 and the steel plate with inward projections 5 is not necessarily to be parallel to the circumferential direction of the steel pipe pile 1 or the steel outer sleeve 2, and it is acceptable if the projection 6 extends over the circumferential direction of each steel pipe. Specifically, it is preferable that the projection 6 extends at an angle closer to the circumferential direction than the axial direction of each steel pipe.

In Embodiments 1 to 3 described above, the extending direction of the projection 6 of the steel plate with outward projections 4 is parallel to the circumferential direction of the steel pipe pile 1 (a direction perpendicular to the axial direction of the steel pipe pile 1). Further, the extending direction of the projection 6 of the steel plate with inward projections 5 is parallel to the circumferential direction of the steel outer sleeve 2 (a direction perpendicular to the axial direction of the steel outer sleeve 2). In these embodiments, a load which is transmitted from a superstructure can be efficiently transmitted from the sleeve pipe to the steel pipe pile through the grout. The term, parallel, as referred to herein need not be exactly parallel, and if it is substantially parallel, the above-described effect is obtained.

### (Fourth Embodiment)

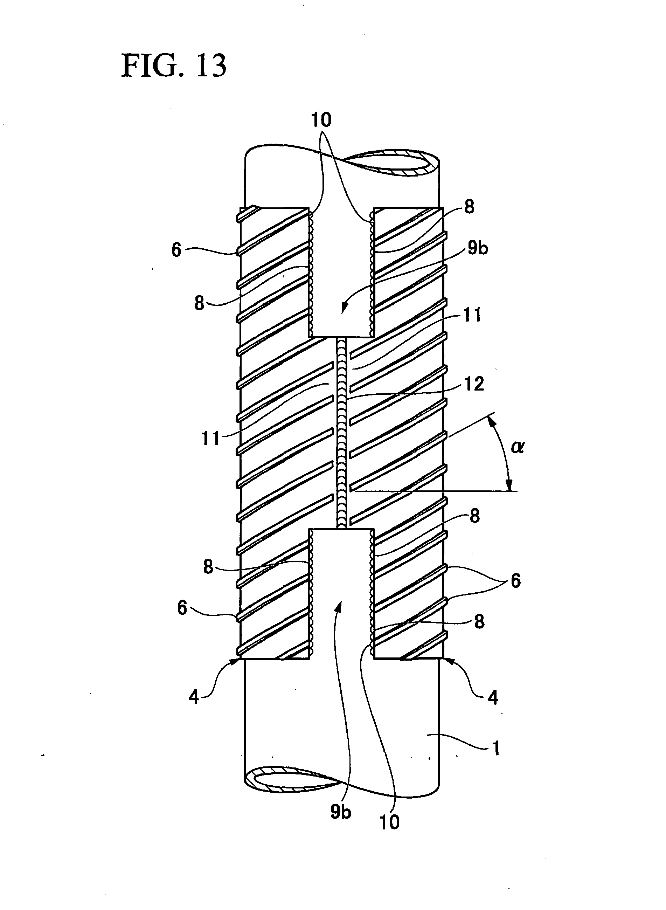

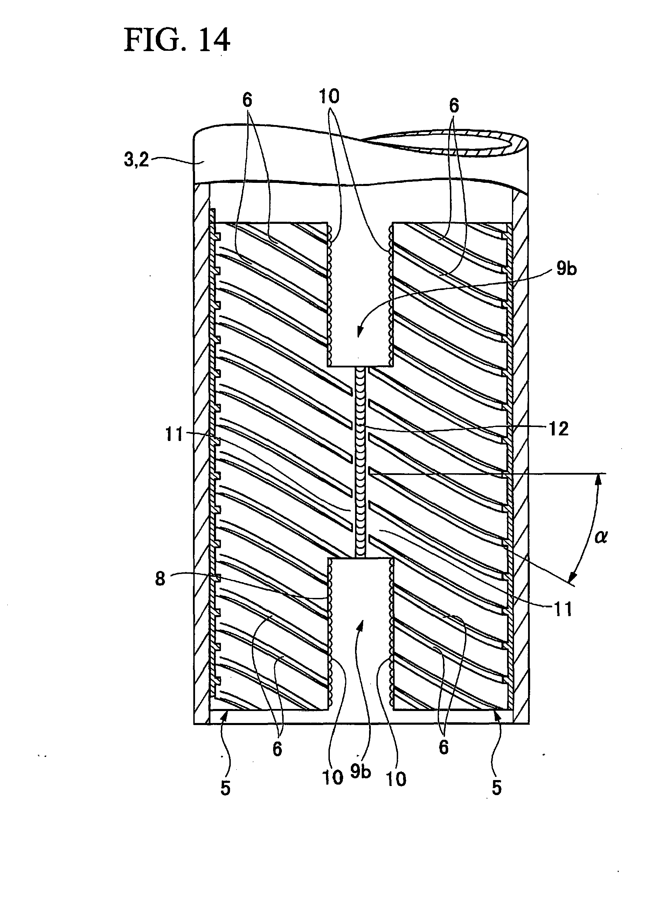

FIGS. 13 and 14 are front views respectively showing the steel pipe pile 1 and the steel outer sleeve 2 according to a fourth embodiment of the present invention. In this embodiment, the projection 6 of the steel plate with outward projections 4 extends to be inclined with respect to the circumferential direction of the steel pipe pile 1. Further, the projection 6 of the steel plate with inward projections 5 extends to be inclined with respect to the circumferential direction of the steel outer sleeve 2. Since other configurations are the same as those in the first embodiment described above, the same portions are denoted by the same reference numerals.

It is preferable that the absolute value of an inclination angle α of the projection 6 be less than or equal to 50°. As shown in FIGS. 13 and 14, with respect to the inclination angle α of the projection 6, on the basis of the circumferential direction of the steel pipe (the horizontal direction), an inclination angle in a counterclockwise direction as viewed from the outside of the steel pipe is represented by a positive value and an inclination angle in a clockwise direction is represented by a negative value. In an example shown in FIGS. 13 and 14, α is 30°.

In this embodiment, with respect to the relationship between the inclination angle of the projection 6 of the steel plate with outward projections 4 and the inclination angle of the projection 6 of the steel plate with inward projections 5, the inclination angles may be the same angle (be parallel to each other), may be different angles (be non-parallel to each other), may have the same sign (for example, a positive angle and a positive angle), and may have different signs (for example, a positive angle and a negative angle; be inclined so as to cross each other). In order to efficiently form a compression area (a compression diagonal bracing) 23, thereby increasing an adhesive force, it is desirable to make the inclination angle of the projection 6 of the steel plate with outward projections 4 and the inclination angle of the projection 6 of the steel plate with inward projections 5 be the same angle and parallel to each other.

In this embodiment, the degree of freedom of an installation angle of each of the steel plates with projections 4 and 5 with respect to the steel pipe pile 1 or the steel outer sleeve 2 increases. Further, a foundation structure using the connection structure according to this embodiment is advantageous in that resistance to torsional torque is improved. In particular, in terms of the characteristics of a facility which is installed on the foundation structure, in a case where torsional torque is frequently transmitted from the facility to the foundation structure (for example, a water current power generation facility), it is advantageously effective.

The fourth embodiment shown in FIGS. 13 and 14 has been described as a modified example based on the first embodiment. However, an angle at which the projection 6 extends may be inclined based on the second embodiment or the third embodiment.

Each embodiment of the present invention has been described above by using the drawings. However, the present invention is not necessarily limited to the illustrated shapes. For example, as the form of the elongated rectangular steel plate with projections, if the steel plate has the longitudinal portion 8 matching the pipe axial direction, an appropriate form is also acceptable. For example, a form having an intermediate concave portion, contrary to the intermediate protrusion portion 11, at the intermediate portion is also acceptable.

Further, in each embodiment of the present invention, the lower end portion of each of the steel plate with outward projections and the steel plate with inward projections may be disposed at a position further on the upper side than the lower end portion of the grout. In this case, an anti-rust effect of the end portion of each steel plate with projections can be increased and corrosion resistance of the connection between the steel pipe pile and the steel sleeve pipe can be increased.

According to the connection structure between the steel pipe pile and the steel sleeve pipe related to the present invention, a problem of residual stress due to weld heat is significantly reduced, and thus fatigue performance is improved, and sufficient shear capacity can be secured.

Reference signs used in the present application are listed as below:
- 1:: steel pipe pile
- 2:: steel outer sleeve
- 3:: steel sleeve pipe
- 4:: steel plate with outward projections
- 5:: steel plate with inward projections
- 6:: projection (inward projection or outward projection)
- 7:: band-shaped steel plate with projections
- 8:: longitudinal portion
- 9:: cutout portion
- 10:: fillet weld
- 11:: intermediate protrusion portion
- 12:: butt weld
- 13:: grout
- 14:: upper flange
- 15:: lower flange
- 16:: prop
- 17:: wind turbine generation facility
- 18:: bottom ground or seabed ground
- 19:: rebar
- 20:: band-shaped steel plate
- 21:: mono-pile type foundation structure
- 22:: shear key
- 23:: compression area (compression diagonal bracing)
- 24:: weld in a circumferential direction of a steel pipe
- 25:: bolt connection
- 26:: blade

## Claims

1. A mono-pile type foundation structure (21) for supporting a structure in which a vibration occurs, wherein:
a connection structure between a steel pipe pile (1) of the mono-pile type foundation structure and a steel sleeve pipe (2, 3) disposed outside the steel pipe pile (1) with a gap therebetween, said mono-pile type foundation structure (21) being **characterized in that**, it comprises
a steel plate (4) with outward projections having a plurality of outward projections (6) and fixed to an outer peripheral surface of the steel pipe pile (1) by a first weld portion, wherein the plurality of outward projections (4) is disposed at intervals in a vertical direction with respect to one another and extends over a circumferential direction of the steel pipe pile (1),
a steel plate (5) with inward projections having a plurality of inward projections (6) and fixed to an inner peripheral surface of the steel sleeve pipe (2, 3) by a second weld portion, and wherein the plurality of inward projections (6) is disposed at intervals in a vertical direction with respect to one another and extends over a circumferential direction of the steel sleeve pipe (2, 3),
wherein a grout (13) filled in the gap so as to bury at least both the steel plate (4) with outward projections and the steel plate (5) with inward projections, and wherein
the first weld portion is a fillet weld or a butt weld having only a weld line in an axial direction of the steel pipe pile (1), and
the second weld portion is a fillet weld or a butt weld having only a weld line in an axial direction of the steel sleeve pipe (2, 3).

2. The mono-pile type foundation structure (21) according to claim 1, wherein the steel plate (4) with outward projections (6) is provided with a cutout (9) or a slit (9) having a first longitudinal portion (8) in a direction matching an axial direction of the steel pipe pile (1),
the steel plate with inward projections is provided with a cutout (9) or a slit (9) having a second longitudinal portion (8) in a direction matching an axial direction of the steel sleeve pipe,
the first weld portion is disposed between the outer peripheral surface of the steel pipe pile (1) and the first longitudinal portion (8), and
the second weld portion is disposed between the inner peripheral surface of the steel sleeve pipe (2, 3) and the second longitudinal portion (8).

3. The mono-pile type foundation structure (21) according to claim 1 or 2, wherein the plurality of outward projections (6) and the plurality of inward projections (6) are projections formed by rolling work.

4. The mono-pile type foundation structure (21) according to any one of claims 1 to 3, wherein each of the steel plate (4) with outward projections (6) and the steel plate (5) with inward projections (6) includes a plurality of plates with projections (6) having a rectangular shape which is longer in a vertical direction than in a horizontal direction, and
the plurality of plates (4, 5) with projections is installed at intervals with respect to one another in the circumferential direction of the steel pipe pile (1) or the steel sleeve pipe (2, 3).

5. The mono-pile type foundation structure (21) according to any one of claims 1 to 4, wherein the plurality of outward projections (6) extends parallel to the circumferential direction of the steel pipe pile (1), and
the plurality of inward projections (6) extends parallel to the circumferential direction of the steel sleeve pipe (2, 3).

6. The mono-pile type foundation structure (21) according to any one of claims 1 to 4, wherein the plurality of outward projections (6) extends to be inclined with respect to the circumferential direction of the steel pipe pile (1), and
the plurality of inward projections (6) extends to be inclined with respect to the circumferential direction of the steel sleeve pipe (2, 3).

7. The mono-pile type foundation structure (21) according to any one of claims 1 to 6, wherein lower end portions of the steel plate (4) with outward projections (6) and the steel plate (5) with inward projections (6) are disposed at a position further on the upper side than a lower end portion of the grout (13).

8. The mono-pile type foundation structure (21) according to any one of claims 1 to 7, wherein a distance between the plurality of outward projections (6) and a distance between the plurality of inward projections (6) are the same.

## Patentansprüche

1. Monopfahl-Fundamentstruktur (21) zum Halten einer Struktur, in der eine Schwingung auftritt, mit:
einer Verbindungsstruktur zwischen einem Stahlrohrpfahl (1) der Monopfahl-Fundamentstruktur und einem Stahlhülsenrohr (2, 3), das außerhalb des Stahlrohrpfahls (1) mit einer Lücke dazwischen angeordnet ist, wobei die Monopfahl-Fundamentstruktur (21) **dadurch gekennzeichnet ist, dass** sie aufweist einer Stahlplatte (4) mit nach außen gerichteten Vorsprüngen, die mehrere nach außen gerichtete Vorsprünge (6) aufweist und an einer Außenumfangsfläche des Stahlrohrpfahls (1) durch einen ersten Schweißabschnitt befestigt ist, wobei die mehreren nach außen gerichteten Vorsprünge (4) in Intervallen in einer vertikalen Richtung in Bezug zueinander angeordnet sind und sich über eine Umfangsrichtung des Stahlrohrpfahls (1) erstrecken,
einer Stahlplatte (5) mit nach innen gerichteten Vorsprüngen, die mehrere nach innen gerichtete Vorsprünge (6) aufweist und an einer Innenumfangsfläche des Stahlhülsenrohrs (2, 3) durch einen zweiten Schweißabschnitt befestigt ist, und wobei die mehreren nach innen gerichteten Vorsprünge (6) in Intervallen in einer vertikalen Richtung in Bezug zueinander angeordnet sind und sich über eine Umfangsrichtung des Stahlhülsenrohrs (2, 3) erstrecken,
wobei ein Mörtel (13) in die Lücke gefüllt ist, um mindestens sowohl die Stahlplatte (4) mit nach außen gerichteten Vorsprüngen und die Stahlplatte (5) mit nach innen gerichteten Vorsprüngen zu verbergen, und wobei
der erste Schweißabschnitt eine Kehlnaht oder eine Stoßnaht ist, die nur eine Schweißlinie in einer axialen Richtung des Stahlrohrpfahls (1) aufweist, und
der zweite Schweißabschnitt eine Kehlnaht oder eine Stoßnaht ist, die nur eine Schweißlinie in einer axialen Richtung des Stahlhülsenrohrs (2, 3) aufweist.

2. Monopfahl-Fundamentstruktur (21) nach Anspruch 1, wobei die Stahlplatte (4) mit nach außen gerichteten Vorsprüngen (6) mit einem Ausschnitt (9) oder einem Schlitz (9) versehen ist, der einen ersten longitudinalen Abschnitt (8) in einer Richtung aufweist, die mit einer axialen Richtung des Stahlrohrpfahls (1) übereinstimmt,
die Stahlplatte mit nach innen gerichteten Vorsprüngen mit einem Ausschnitt (9) oder einem Schlitz (9) versehen ist, der einen zweiten longitudinalen Abschnitt (8) in einer Richtung aufweist, die mit einer axialen Richtung des Stahlhülsenrohrs übereinstimmt, der erste Schweißabschnitt zwischen der Außenumfangsfläche des Stahlrohrpfahls (1) und dem ersten longitudinalen Abschnitt (8) angeordnet ist, und
der zweite Schweißabschnitt zwischen der Innenumfangsfläche des Stahlhülsenrohrs (2, 3) und dem zweiten longitudinalen Abschnitt (8) angeordnet ist.

3. Monopfahl-Fundamentstruktur (21) nach Anspruch 1 oder 2, wobei die mehreren nach außen gerichteten Vorsprünge (6) und die mehreren nach innen gerichteten Vorsprünge (6) Vorsprünge sind, die durch eine Walzarbeit gebildet sind.

4. Monopfahl-Fundamentstruktur (21) nach einem der Ansprüche 1 bis 3, wobei die Stahlplatte (4) mit nach außen gerichteten Vorsprüngen (6) und die Stahlplatte (5) mit nach innen gerichteten Vorsprüngen (6) jeweils mehrere Platten mit Vorsprüngen (6) umfassen, die eine rechteckige Form aufweisen, die in einer vertikalen Richtung länger als in einer horizontalen Richtung ist, und
die mehreren Platten (4, 5) mit Vorsprüngen in Intervallen in Bezug zueinander in der Umfangsrichtung des Stahlrohrpfahls (1) oder des Stahlhülsenrohrs (2, 3) angebracht sind.

5. Monopfahl-Fundamentstruktur (21) nach einem der Ansprüche 1 bis 4, wobei sich die mehreren nach außen gerichteten Vorsprünge (6) parallel zur Umfangsrichtung des Stahlrohrpfahls (1) erstrecken, und
sich die mehreren nach innen gerichteten Vorsprünge (6) parallel zur Umfangsrichtung des Stahlhülsenrohrs (2, 3) erstrecken.

6. Monopfahl-Fundamentstruktur (21) nach einem der Ansprüche 1 bis 4, wobei sich die mehreren nach außen gerichteten Vorsprünge (6) so erstrecken, dass sie bezüglich der Umfangsrichtung des Stahlrohrpfahls (1) geneigt sind, und sich die mehreren nach innen gerichteten Vorsprünge (6) so erstrecken, dass sie bezüglich der Umfangsrichtung des Stahlhülsenrohrs (2, 3) geneigt sind.

7. Monopfahl-Fundamentstruktur (21) nach einem der Ansprüche 1 bis 6, wobei untere Endabschnitte der Stahlplatte (4) mit nach außen gerichteten Vorsprüngen (6) und der Stahlplatte (5) mit nach innen gerichteten Vorsprüngen (6) an einer Position angeordnet sind, die weiter an der Oberseite liegt als ein unterer Endabschnitt des Mörtels (13).

8. Monopfahl-Fundamentstruktur (21) nach einem der Ansprüche 1 bis 7, wobei ein Abstand zwischen den mehreren nach außen gerichteten Vorsprüngen (6) und ein Abstand zwischen den mehreren nach innen gerichteten Vorsprüngen (6) derselbe ist.

## Revendications

1. Structure de fondation de type monopieu (21) destinée à supporter une structure soumise à des vibrations, où :
une structure de liaison entre un pieu tubulaire en acier (1) de la structure de fondation de type monopieu et un tube externe en acier (2, 3) disposé à l'extérieur du pieu tubulaire en acier (1) avec un espace intercalaire, ladite structure de fondation de type monopieu (21) étant **caractérisée en ce qu'**elle comprend
une plaque en acier (4) présentant une pluralité de saillies extérieures (6) et fixée sur une surface périphérique extérieure du pieu tubulaire en acier (1) par une première soudure,
les plusieurs saillies extérieures (4) étant espacées entre elles dans une direction verticale et s'étendant dans une direction circonférentielle du pieu tubulaire en acier (1), une plaque en acier (5) présentant une pluralité de saillies intérieures (6) et fixée sur une surface périphérique intérieure du tube externe en acier (2, 3) par une deuxième soudure,
les plusieurs saillies intérieures (6) étant espacées entre elles dans une direction verticale et s'étendant dans une direction circonférentielle du tube externe en acier (2, 3), un coulis (13) remplissant l'espace intercalaire de manière à noyer au moins la plaque en acier (4) présentant les saillies extérieures et la plaque en acier (5) présentant les saillies intérieures,
la première soudure étant une soudure d'angle ou une soudure en bout avec seulement une ligne de soudure dans la direction axiale du pieu tubulaire en acier (1), et
la deuxième soudure étant une soudure d'angle ou une soudure en bout avec seulement une ligne de soudure dans la direction axiale du tube externe en acier (2, 3).

2. Structure de fondation de type monopieu (21) selon la revendication 1, où la plaque en acier (4) avec des saillies extérieures (6) est prévue avec une découpe (9) ou une fente (9) avec une première longueur (8) dans une direction correspondant à la direction axiale du pieu tubulaire en acier (1),
la plaque en acier avec des saillies intérieures est prévue avec une découpe (9) ou une fente (9) avec une deuxième longueur (8) dans une direction correspondant à la direction axiale du tube externe en acier,
la première soudure est située entre la surface périphérique extérieure du pieu tubulaire en acier (1) et la première longueur (8), et
la deuxième soudure est située entre la surface périphérique intérieure du tube externe en acier (2, 3) et la deuxième longueur (8).

3. Structure de fondation de type monopieu (21) selon la revendication 1 ou la revendication 2, où la pluralité de saillies extérieures (6) et la pluralité de saillies intérieures (6) sont formées par laminage.

4. Structure de fondation de type monopieu (21) selon l'une des revendications 1 à 3, où la plaque en acier (4) présentant des saillies extérieures (6) et la plaque en acier (5) présentant des saillies intérieures (6) comprennent chacune une pluralité de plaques présentant des saillies (6), en forme de rectangles ayant leur longueur dans la direction verticale et leur largeur dans la direction horizontale, et où
les plusieurs plaques (4, 5) présentant des saillies sont disposées espacées entre elles dans la direction circonférentielle du pieu tubulaire en acier (1) ou du tube externe en acier (2, 3).

5. Structure de fondation de type monopieu (21) selon l'une des revendications 1 à 4, où les plusieurs saillies extérieures (6) s'étendent parallèlement à la direction circonférentielle du pieu tubulaire en acier (1), et où
les plusieurs saillies intérieures (6) s'étendent parallèlement à la direction circonférentielle du tube externe en acier (2, 3).

6. Structure de fondation de type monopieu (21) selon l'une des revendications 1 à 4, où les plusieurs saillies extérieures (6) s'étendent obliquement par rapport à la direction circonférentielle du pieu tubulaire en acier (1), et où
les plusieurs saillies intérieures (6) s'étendent obliquement par rapport à la direction circonférentielle du tube externe en acier (2, 3).

7. Structure de fondation de type monopieu (21) selon l'une des revendications 1 à 6, où des extrémités inférieures de la plaque en acier (4) présentant des saillies extérieures (6) et des extrémités inférieures de la plaque en acier (5) présentant des saillies intérieures (6) sont situées plus haut qu'une extrémité inférieure du coulis (13).

8. Structure de fondation de type monopieu (21) selon l'une des revendications 1 à 7, où l'espacement entre les plusieurs saillies extérieures (6) est égale à l'espacement entre les plusieurs saillies intérieures (6).
